# EUROPÄISCHE PATENTSCHRIFT

(11) **EP 1 336 514 B1**
(45) Veröffentlichungstag und Bekanntmachung des Hinweises auf die Patenterteilung: **02.04.2008**
(21) Anmeldenummer: 03002725.4
(22) Anmeldetag: 06.02.2003
(51) Int. Cl.: B60G 7/00, B60G 9/00

(54) **Vierpunktlenker zur Anbindung einer Starrachse an den Rahmen eines Nutzfahrzeuges**
Four-point-arm for connecting a rigid axle to the frame of a utility vehicle
Bras à quatre points pour raccorder un essieu rigide au chassis d'un véhicule utilitaire

(30) Priorität: 19.02.2002 DE 10206809
(43) Veröffentlichungstag der Anmeldung: 20.08.2003
(73) Patentinhaber: MAN Nutzfahrzeuge Aktiengesellschaft, 80976 München (DE)
(72) Erfinder: Dresig, Horst, Dr.Dipl.-Ing., 80152 Planegg (DE); Hörmann, Robert, Dipl.-Ing., 85463 Walpertskirchen (DE); Nickels, Thomas, Dipl.-Ing., 81541 München (DE); Schmitt, Peter, Dipl.-Ing.(FH), 80937 München (DE)

(56) Entgegenhaltungen:
- EP-A- 0 949 093
- EP-A- 1 057 665

## Beschreibung

Die Erfindung betrifft einen Vierpunktlenker zur Anbindung einer Starrachse an dem Rahmen eines Nutzfahrzeuges nach dem Oberbegriff des Anspruches 1.

Ein Vierpunktlenker dieser Art ist aus der EP 0 776 275 B1 bekannt. Der patentierte Vierpunktlenker ist ein verwindbares Kreuz mit definierter Verwindungskennlinie an dem vier Lageraugen an den Enden des Kreuzes für die Anbindung an der Achse und dem Fahrzeugaufbau vorgesehen sind.

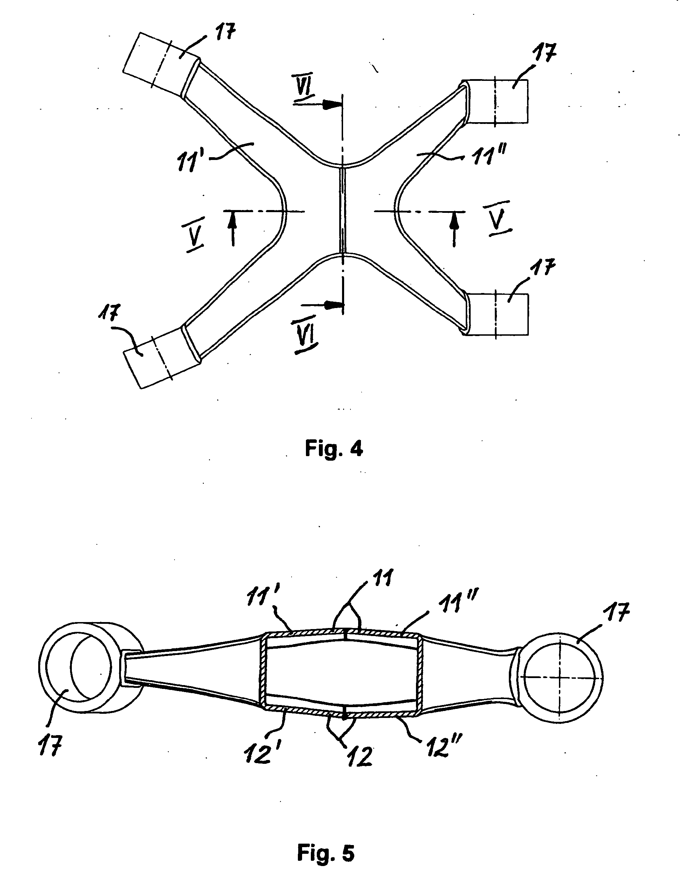

Eine kreuzförmige Form des Vierpunktlenkers ist in Fig. 5 gezeigt. Der Querschnitt des Vierpunktlenkers in der genannten Figur entspricht etwa einem Doppel-T-Querschnitt mit sich verändernder Ober- und Untergurtbreite. Wie weiterhin aus der Figur erkennbar ist, ist der Vierpunktlenker ein Gussteil. Die Ausführung wäre aber auch als Schweißteil denkbar.

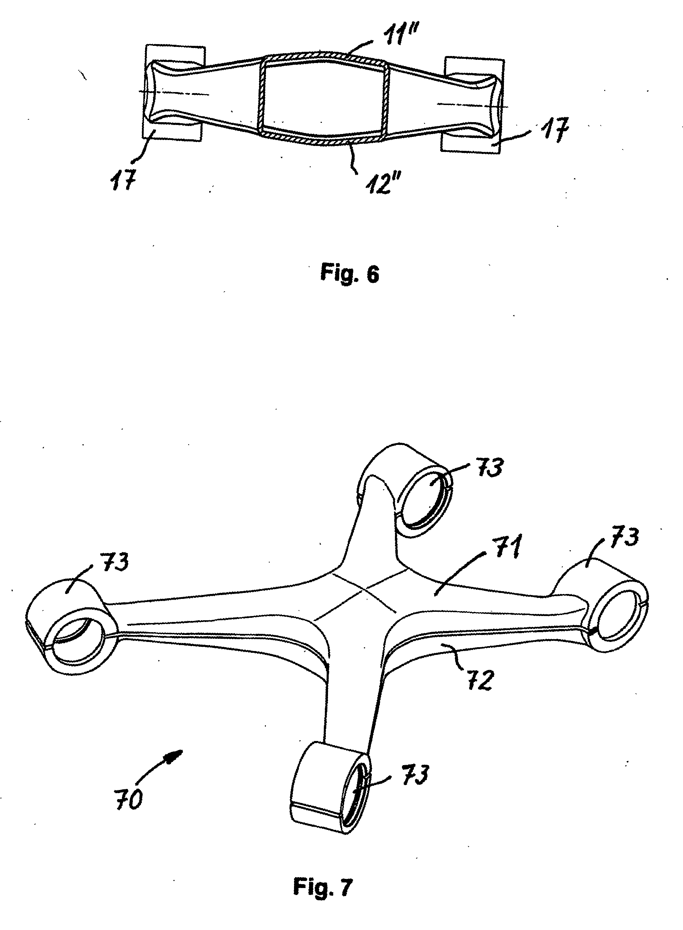

Eine weitere kreuzförmige Ausführung ist in Fig. 7 der genannten EP-Patentschrift gezeigt. Die kreuzförmig angeordneten Streben werden durch weitere Träger, die in einem Viereck angeordnet sind, versteift. Diese Ausführung eignet sich eher zum Übertragen von Quer- und Längskräften und eignet sich weniger zum Unterdrücken von Wankbewegungen des Fahrzeuges.

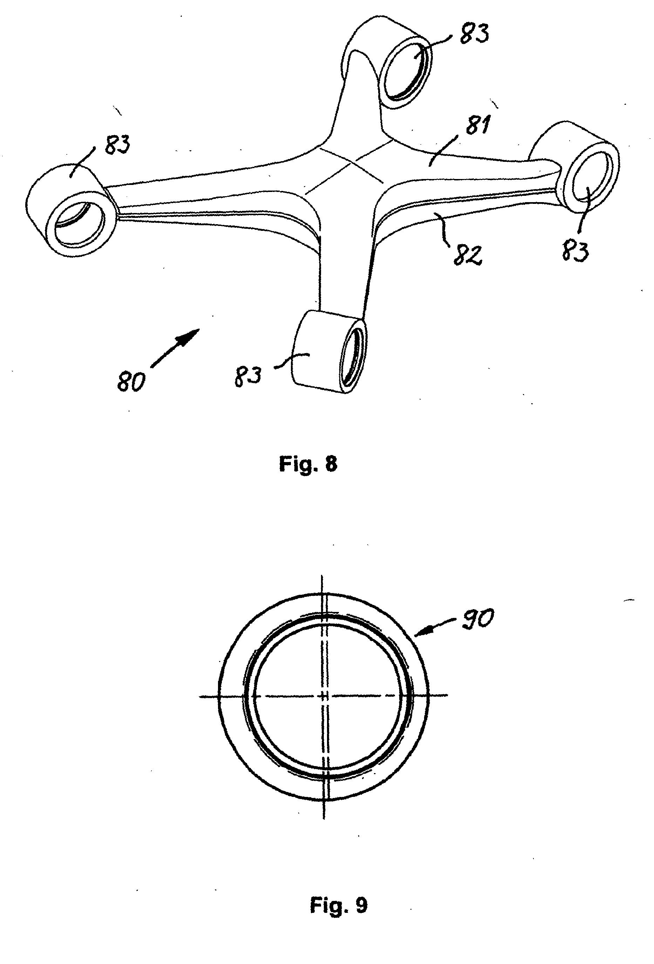

In der genannten EP-Patentschrift sind weitere Ausführungsbeispiele aufgezeigt. Beispielhaft wird die in Fig. 8 dargestellte Lösung herangezogen. Bei dieser Ausführung werden zwei (Guss-) Halbschalen zu einem Hohlkörper zusammengefügt. Der Nachteil dieser Ausführung ist, dass die Wandungen zwischen den Trägern aus ihrer Lage ausweichen können, was dann zur Zerstörung des Vierpunktlenkers führen würde. Wenn man die Wandungen dicker machen würde, wäre ein Gewichtsvorteil nicht mehr vorhanden.

Aus der EP 0 949 093 A2 ist ein Vierpunktlenker bekannt, der als einstückiges Gesenkschmiedeteil aus geeignetem Stahlmaterial ausgeführt ist. Hierbei sind die sich kreuzenden Arme des Vierpunktlenkers weitgehend nach Art von Parabelfedern gestaltet, also entsprechend einem Biegeträger gleicher Festigkeit bzw. gleicher Randspannung ausgelegt. Da der beschriebene Vierpunktlenker als Gesenkschmiedeteil ausgeführt ist, verfügt er über ein erhebliches Gewicht.

Ferner beschreibt die EP 1 057 665 A1 einen X-förmigen Vierpunktlenker, der vier außen liegende Lageraugen aufweist, wobei das Querschnittsprofil den Gegebenheiten angepasst wird und aus einem Hohlprofil bestehen kann. Zur Herstellung des Hohlprofils wird die Verwendung eines Flächentragwerks vorgeschlagen, das als ebene Fläche ausgebildet ist, wobei zwei planparallele Platten einen Hohlraum einschließen.

Aufgabe der Erfindung ist es, einen leichten Vierpunktlenker, der auch hohe Kräfte aufnehmen kann, darzustellen.

Die Aufgabe wird erfindungsgemäß durch die Merkmale des Anspruches 1 gelöst.

Dadurch, dass der Vierpunktlenker aus einem gebauten, X-förmigen Hohlkörper besteht, kann man eine Formgebung wählen, die zur Aufnahme von zu übertragenden Kräften optimal gestaltet ist.

Deshalb hat der X-förmige Hohlkörper, an dessen Enden insgesamt vier Lageraugen sind, von den Lageraugen beginnend zur Mitte des Hohlkörpers hin, zunehmenden Querschnitt. Dadurch können die auftretenden Kräfte besonders gut aufgenommen werden. Der erfindungsgemäße Vierpunktlenker zeichnet sich hierbei dadurch aus, dass der Hohlkörper X-förmig angeordnete Arme, an denen außen Lageraugen angeordnet sind, aufweist, die durch eine Deckplatte und eine Bodenplatte, die jeweils einteilig oder mehrteilig ausgeführt sind, gebildet werden und die von den Lageraugen aus beginnend zur Mitte des Hohlkörpers hin zunehmenden Querschnitt haben.

An besonders hochbelasteten Lagerstellen, wie es beispielsweise die Anlenkstellen mit der Starrachse sein können, ist es vorteilhaft, wenn der Querschnitt des X-förmigen Hohlkörpers kurz vor der Schweißnaht zu dem jeweiligen Lagerauge hin, erweitert ist. Dadurch erhält man eine etwas größere Schweißnahtlänge und verbesserte Kraftübertragung.

Analog gilt für die Ausgestaltung des X-förmigen Hohlkörpers als Schmiedeteil mit hälftig angeschmiedeten Lageraugen, dass hier die Querschnittsführung so gewählt sein kann, dass sich nach dem Zusammenschweißen der Schmiedeteile, kurz vor dem Übergang zum Lagerauge hin, ein erweiterter Querschnitt ergibt.

Die Beanspruchung des Vierpunktlenkers durch Kräfte aus der Fahrdynamik des Fahrzeuges ist sehr hoch, da der Vierpunktlenker einer zusammengesetzten Beanspruchung unterliegt.

Der Vierpunktlenker muss unter anderem die aus Bremsmomenten resultierenden Abstützkräfte und Kräfte aus Längsführungsbeanspruchungen aufnehmen.

Weiterhin hat er die Aufgabe, die Kräfte aus seiner Querführungsfunktion von Fahrzeug und Achse aufzunehmen.

Weiterhin müssen, gerade beispielsweise bei einem Lkw, bei dem der Gesamtschwerpunkt recht hoch liegen kann, Wankbewegungen des Fahrzeuges abgebaut bzw. es muss den Wankbewegungen entgegengewirkt werden. In diesem Fall wird der Vierpunktlenker mit einem Drehmoment beaufschlagt.

Die drei genannten Beanspruchungen treten sehr oft kombiniert auf.

Hinzu kommt, dass die Kräfte dynamisch sind und sich häufig alle addieren.

Die Formgebung und die Freiheitsgrade für die Formgebung des Vierpunktlenkers sind entscheidend darüber, ob der Lenker geeignet ist oder nicht.

An dieser Stelle sei darauf hingewiesen, dass insbesondere bei einem Lkw jedes Bauteil, das nicht optimal gestaltet ist, einen Verlust an zulässigem Beladungsgewicht bedeutet und damit das Fahrzeug in seiner Wettbewerbsfähigkeit am Markt behindert und einschränkt.

Auch aus diesem Grund kann eine teuere Lösung, wenn sie leichter baut, die bessere Lösung sein.

Vorzugsweise ist der gebaute X-förmige Hohlkörper aus vorgefertigten, gedrückten oder ebenen Blechteilen zusammengeschweißt.

Der X-förmige Hohlkörper besteht aus einer Deck- und Bodenplatte, die beide dachförmig gedrückt sind und aus den entsprechend geformten Seitenwänden. Die genannten Teile können jeweils einteilig oder mehrteilig sein.

Die dachförmige Formgebung von Deck- und Bodenplatte hat beispielsweise den Sinn, dass eine definierte Kraftaufnahme möglich ist, ein Ausknicken oder ein Ausbeulen, wie dies bei ebenen Platten möglich wäre, nicht erfolgen kann und die Auslastung des Materials homogen erfolgt.

Vorzugsweise sind die Lageraugen an den Enden des X-förmigen Hohlkörpers angeschweißt. Zur weiteren Gewichtseinsparung können die Lageraugen exzentrisch ausgebildet sein, wobei dann die dickere Seite der Lageraugen Schweißseite ist.

Das Material des X-förmigen Hohlkörpers und gegebenenfalls auch der Lageraugen ist ein legiertes Stahlhalbzeug, das auch schweißfähig ist.

Denkbar ist die Ausführung des Vierpunktlenkers oder des X-förmigen Hohlkörpers auch aus Schmiedeteilen. Dabei ist in vorteilhafter Weise ein Unterteil und ein Oberteil gebildet, die miteinander verschweißt sind.

Bei dieser Herstellungsart können entweder die Lageraugen hälftig im Schmiedeteil beinhaltet sein, oder die Lageraugen können auch separat angeschweißt sein.

In der Zeichnung sind Ausführungsbeispiele der Erfindung schematisch dargestellt.

Es zeigen:
- Fig. 1: einen Vierpunktlenker mit Hohlkörper in Blechausführung,
- Fig. 2: eine Explosionszeichnung des Teiles Fig. 1,
- Fig. 3: einen Vierpunktlenker mit Hohlkörper in einer weiteren Blechausführung,
- Fig. 4: eine Draufsicht auf den Vierpunktlenker,
- Fig. 5: den Schnitt V - V aus Fig. 4,
- Fig. 6: den Schnitt VI - VI aus Fig. 4,
- Fig. 7: einen Vierpunktlenker aus Schmiedeeinzelteilen mit angeschmiedeten Lageraugen,
- Fig. 8: einen Vierpunktlenker aus Schmiedeeinzelteilen mit angeschweißten Lageraugen,
- Fig. 9: ein exzentrisches Lagerauge,
- Fig. 10: den Einbau des Vierpunktlenkers im Fahrzeug.

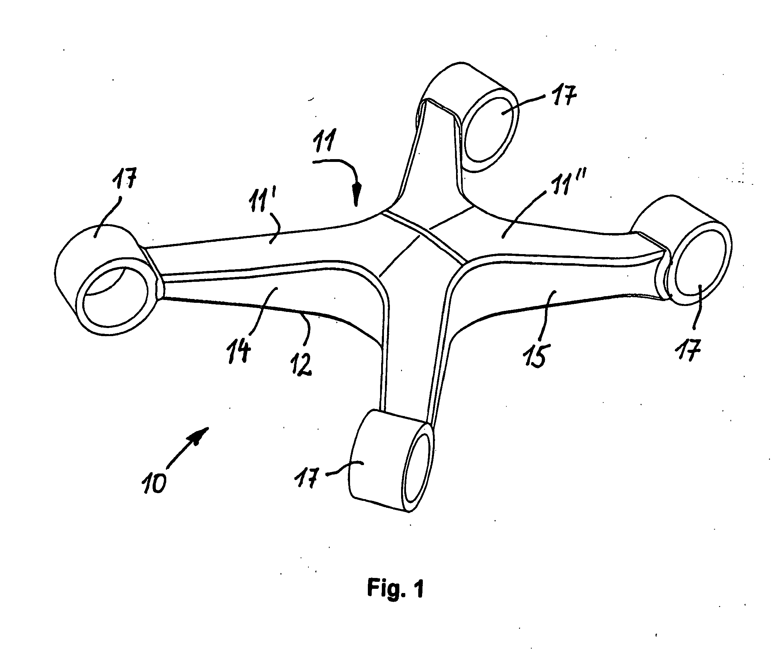

Die Fig. 1 zeigt den Vierpunktlenker mit dem X-förmigen Hohlkörper 10 in Blechausführung. Die Deckplatte 11 kann aus den Teilen 11' und 11" bestehen. Das gleiche gilt für die Bodenplatte 12, die in dieser Darstellung nicht sichtbar ist.

Gut erkennbar ist, wie der X-förmige Hohlkörper von den Lageraugen beginnend zur Mitte hin, einen steigenden Querschnitt hat. Dies ist auch an den Seitenteilen 14, 15 erkennbar, die in dieser Ausführung jeweils einteilig sind. Die Lageraugen 17 sind angeschweißt.

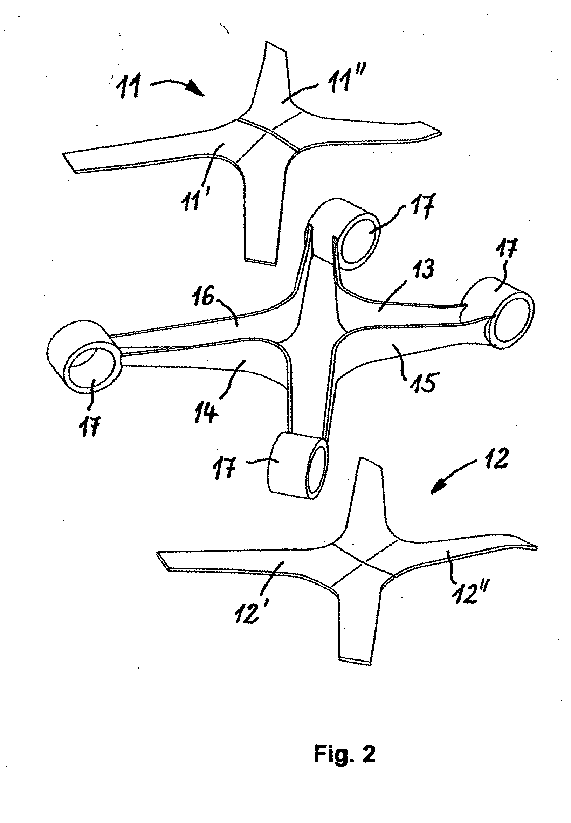

Die Fig. 2 zeigt eine Explosionszeichnung von Fig. 1. Die Blechteile 11, 11', 11", 12, 12', 12", 13, 14, 15 und 16 sind vorgefertigt und gedrückt.

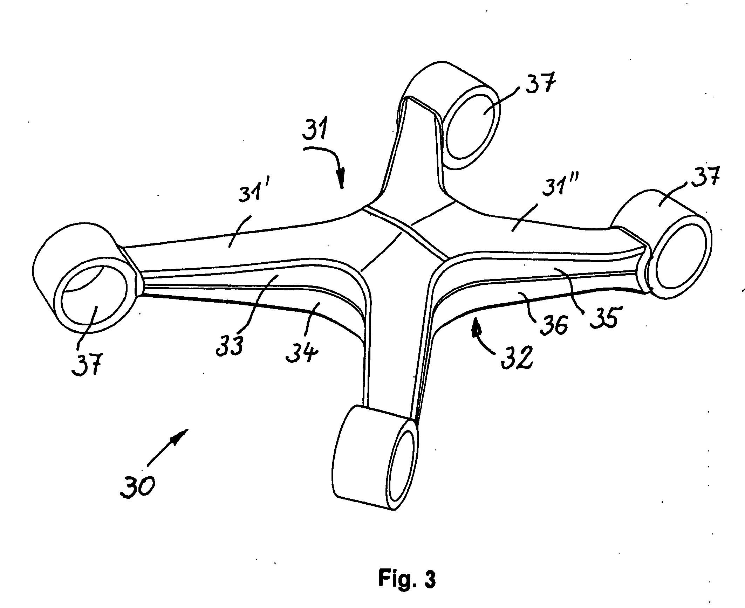

Die Fig. 3 zeigt den Vierpunktlenker mit dem X-förmigen Hohlkörper 30 einer weiteren Ausführung, bei der im Unterschied zu der in Fig. 1 gezeigten Ausführung die Seitenwände, in der Zeichnung sichtbar sind die Seitenwandteile 33, 34, 35 und 36, geteilt sind. Durch die geteilte Gestaltung kann möglicherweise das Herstellen des X-förmigen Hohlkörpers vereinfacht werden.

Die Fig. 4 zeigt eine Draufsicht auf den Vierpunktlenker.

Die Fig. 5 zeigt den Schnitt V - V aus Fig. 4. Im geschnittenen Teil aber auch in den Armen des X-förmigen Hohlkörpers ist die dachförmige Ausgestaltung von Deckblech 11, 11', 11" und Bodenblech 12, 12', 12" erkennbar.

Weiterhin ist die Zunahme des Querschnittes des Hohlkörpers, beginnend von den Lageraugen zur Mitte des Hohlkörpers hin, erkennbar.

Auf der rechten Seite von Fig. 5 ist der Anschluss des Hohlkörpers an ein hochbelastbares Lagerauge 17 erkennbar. Kurz vor der Schweißnaht mit dem Lagerauge 17 ist der Querschnitt des Hohlkörpers erweitert.

Die Fig. 6 zeigt den Schnitt VI- VI aus Fig. 4. Auch hier ist, ergänzend zu der Darstellung, Fig. 5, die dachförmige Ausgestaltung und der Querschnittsverlauf erkennbar.

Die Fig. 7 zeigt den Vierpunktlenker in einer Schmiedeausführung. Der Verpunktlenker besteht aus einem Oberteil 71 und einem Unterteil 72 mit angeschmiedeten Lageraugenhälften. Die Teilung ist horizontal. Die beiden Schalenhälften 71, 72 werden nach dem Schmieden zusammengeschweißt und bilden dann den Hohlkörper 70 mit den Lageraugen 73.

Die Fig. 8 zeigt auch einen Vierpunktlenker als Schmiedeteil, ähnlich wie die Fig. 7.

Nach Fig. 8 ist der X-förmige Hohlkörper 80, der aus den Schmiedeteilen 81 und 82 besteht, das gebaute Schmiedeteil. Die Lageraugen sind angeschweißt.

Die Fig. 9 zeigt eine exzentrische Buchse 90, die technisch auch als Rohrhalbzeug herstellbar ist. Die dickere Wandseite der Buchse ist Schweißseite zum X-förmigen Hohlkörper hin. Diese Ausführung ist gewichtssparend .

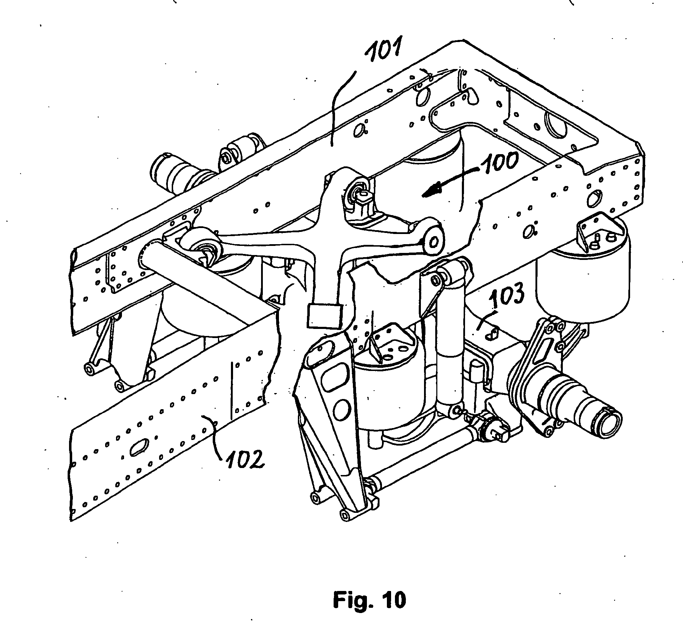

Die Fig. 10 zeigt den Einbau des Vierpunktlenkers 100 in einem Lkw. Der Vierpunktlenker 100 ist mit zwei Armen mit dem Rahmen 101, 102 und mit zwei Armen mit der Achse 103 verbunden. Der Vierpunktlenker 100 ersetzt Längslenker an dieser Stelle sowie Querlenker und einen Querstabilisator an dieser Achse.

## Patentansprüche

1. Vierpunktlenker zur Anbindung einer Starrachse an den Rahmen eines Nutzfahrzeuges, wobei der Vierpunktlenker X-förmig ausgebildet ist und vier Lageraugen für die Anlenkung aufweist, von denen zwei Anlenkstellen mit der Starrachse und zwei mit dem Rahmen verbunden sind und die Wirkung des Vierpunktlenkers alleine betrachtet eine Querführungsfunktion und gegen Wankbewegungen eine Stabilisierungsfunktion und in Wirkverbindung mit Längslenkern betrachtet, eine Längsführungsfunktion der Achse hat, wobei der Vierpunktlenker (100) aus mehreren vorgefertigten Teilen (11, 12, 13, 14, 15, 16, 17, 31, 32, 33, 34, 35, 36, 71, 72, 81, 82, 83), die einen Hohlkörper bilden, zusammengefügt ist, **dadurch gekennzeichnet, dass** der Hohlkörper X-förmig angeordnete Arme, an denen außen Lageraugen (17, 37, 73, 83) angeordnet sind, aufweist, die durch eine Deckplatte (11) und eine Bodenplatte (12), die jeweils einteilig oder mehrteilig ausgeführt sind, gebildet werden und die von den Lageraugen (17, 37, 73, 83) aus beginnend zur Mitte des Hohlkörpers hin zunehmenden Querschnitt haben.

2. Vierpunktlenker nach Anspruch 1, **dadurch gekennzeichnet, dass** vorgefertigte Teile (11, 12, 13, 14, 15, 16, 31, 32, 33, 34, 35, 36) des X-förmigen Hohlkörpers (10, 30) gedrückte oder ebene Blechteile sind.

3. Vierpunktlenker nach den Ansprüchen 1 und 2, **dadurch gekennzeichnet, dass** der X-förmige Hohlkörper (10, 30) aus einer Deckplatte (11) und Bodenplatte (12) besteht, die jeweils einteilig oder mehrteilig (11', 11", 12', 12") sein kann und der entsprechenden Anzahl von Seitenwänden (13, 14, 15, 16), von denen die entsprechend jeweilige, beispielsweise (15) ebenfalls einteilig(15) oder mehrteilig (35, 36) sein kann.

4. Vierpunktlenker nach den Ansprüchen 1 bis 3, **dadurch gekennzeichnet, dass** die Deckplatte (11) und die Bodenplatte (12) vorzugsweise nicht eben, sondern jeweils in sich dachförmig ausgebildet ist.

5. Vierpunktlenker nach Anspruch 1, **dadurch gekennzeichnet, dass** die Lageraugen (17, 37, 83) an den Enden des X-förmigen Hohlkörpers (10, 30, 80) angeschweißt sind.

6. Vierpunktlenker nach den Ansprüchen 1 bis 5, **dadurch gekennzeichnet, dass** an besonders hochbelasteten Lagerstellen, beispielsweise an den Anlenkstellen mit der Starrachse, der Querschnitt des X-förmigen Hohlkörpers (10, 30, 70, 80) kurz vor der Schweißnaht bzw. dem Anschluss zu dem jeweiligen Lagerauge (17, 37, 73, 83) hin, erweitert ist.

7. Vierpunktlenker nach Anspruch 5, **dadurch gekennzeichnet, dass** die Lageraugen zentrisch oder exzentrisch (90) sein können und bei der exzentrischen Ausführung die dicke Seite Schweißseite ist.

8. Vierpunktlenker nach mehreren der vorangegangenen Ansprüche, **dadurch gekennzeichnet, dass** der X-förmige Hohlkörper (10, 30, 70, 80) und gegebenenfalls die Lageraugen (17, 37, 83) aus einem legierten Stahlhalbzeug, das auch schweißfähig ist, beispielsweise aus Stahl 1.7734 (Cr Mo Stahl) bestehen.

9. Vierpunktlenker nach Anspruch 1, **dadurch gekennzeichnet, dass** der X-förmige Hohlkörper (70, 80) aus zwei geschmiedeten Schalenhälften (71, 72, 81, 82) gebildet ist, die miteinander verschweißt sind.

10. Vierpunktlenker nach Anspruch 9, **dadurch gekennzeichnet, dass** die geschmiedeten Schalenhälften (71, 72) die Lageraugen (73) jeweils hälftig beinhalten.

11. Vierpunktlenker nach Anspruch 9, **dadurch gekennzeichnet, dass** die Lageraugen (83) angeschweißt sind.

## Claims

1. Four-point link for linking a rigid axle to the frame of a commercial vehicle, whereby the four-point link is X-shaped and has four bearing eyes for location, two of which locating points are connected with the rigid axle and two with the frame, and whereby the four-point link, if viewed by itself, has a transverse guiding function and a stabilising function to counter rolling motion and, if viewed in working connection with the longitudinal members, has a longitudinal guiding function for the axle, whereby the four-point link (100) is composed of several prefabricated parts (11, 12, 13, 14, 15, 16, 17, 31, 32, 33, 34, 35, 36, 71, 72, 81, 82, 83) forming a hollow body, **characterised in that** the hollow body features arms in X-type arrangement, at the outer ends of which arms are arranged bearing eyes (17, 37, 73, 83) which are formed by a top plate (11) and a bottom plate (12) which are each designed as either a single-piece or a multi-piece unit and have a cross-section which increases from the bearing eyes (17, 37, 73, 83) towards the centre of the hollow body.

2. Four-point link according to Claim 1, **characterised in that** the prefabricated parts (11, 12, 13, 14, 15, 16, 31, 32, 33, 34, 35, 36) of the X-shaped hollow body (10, 30) are pressed or flat metal-sheet parts.

3. Four-point link according to the Claims 1 and 2, **characterised in that** the X-shaped hollow body (10, 30) consists of a top plate (11) and a bottom plate (12), each of which can be designed as either a single-piece or a multi-piece unit (11', 11 ", 12', 12"), and of the corresponding number of side walls (13, 14, 15, 16), each of which walls can, for example, also be either a single-piece unit (15) or a multi-piece unit (35, 36).

4. Four-point link according to the Claims 1 and 3, **characterised in that** the top plate (11) and the bottom plate (12) are preferably not of flat design, but are, in themselves, of roof-type design.

5. Four-point link according to Claim 1, **characterised in that** the bearing eyes (17, 37, 83) are welded to the ends of the X-shaped hollow body (10, 30, 80).

6. Four-point link according to the Claims 1 to 5, **characterised in that** the cross-section of the X-shaped hollow body (10, 30, 70, 80) is enlarged immediately before the welding seam and the connection to each bearing eye (17, 37, 73, 83) at bearing points particularly exposed to high stresses, eg at the locating points for connection with the rigid axle.

7. Four-point link according to the Claim 5, **characterised in that** the bearing eyes can be centric or eccentric (90) and that in the event of their being eccentric the thick side is the welded side.

8. Four-point link according to several of the foregoing Claims, **characterised in that** the X-shaped hollow body (10, 30, 70, 80) and, if necessary, the bearing eyes (17, 37, 83) consist of an semifinished alloy steel part which is also capable of being welded, eg of 1.7734 (Cr Mo steel).

9. Four-point link according to the Claim 1, **characterised in that** the X-shaped hollow body (70, 80) consists of two forged shell halves (71, 72, 81, 82) welded to each other.

10. Four-point link according to Claim 9, **characterised in that** each forged shell half (71, 72) contains one half of the bearing eye (73).

11. Four-point link according to Claim 9, **characterised in that** the bearing eyes (83) are welded into place.

## Revendications

1. Bras de guidage à quatre points pour relier un essieu rigide au cadre d'un véhicule industriel, auquel cas le bras de guidage à quatre points possède une forme en X et présente quatre oeillets de fixation pour l'articulation, parmi lesquels deux points d'articulation sont reliés à l'essieu rigide et deux au cadre, et l'effet du bras de guidage à quatre points considéré à lui seul possède une fonction de guidage transversal et une fonction de stabilisation contre les mouvements de roulis, et, considéré en liaison avec les bras de guidage longitudinaux, possède une fonction de guidage longitudinal de l'essieu, auquel cas le bras de guidage à quatre points (100) se compose de plusieurs pièces préfabriquées (11, 12, 13, 14, 15, 16, 17, 31, 32, 33, 34, 35, 36, 71, 72, 81, 82, 83) qui forment un corps creux, **caractérisé en ce que** le corps creux présente des bras disposés en forme de X sur lesquels sont disposés des oeillets de fixation (17, 37, 73, 83) côté extérieur, qui sont formés d'une plaque de recouvrement (11) et d'une plaque de fond (12) composées respectivement d'une pièce ou de plusieurs pièces, et qui possède une section croissant à partir des oeillets de fixation (17, 37, 73, 83) jusqu'au milieu du corps creux.

2. Bras de guidage à quatre points selon la revendication 1, **caractérisé en ce que** les pièces préfabriquées (11, 12, 13, 14, 15, 16, 17, 31, 32, 33, 34, 35, 36) du corps creux en forme de X (10, 30) sont des pièces en tôle emboutie ou plate.

3. Bras de guidage à quatre points selon les revendications 1 et 2, **caractérisé en ce que** le corps creux en forme de X (10, 30) se compose d'une plaque de recouvrement (11) et d'une plaque de fond (12) qui peuvent consister respectivement en une pièce ou plusieurs pièces (11', 11 ", 12', 12") et en un nombre correspondant de parois latérales (13, 14, 15, 16), parmi lesquelles chacune peut également se composer d'une pièce (15) ou de plusieurs pièces (35, 36).

4. Bras de guidage à quatre points selon les revendications 1 à 3, **caractérisé en ce que** la plaque de recouvrement (11) et la plaque de fond (12) ne sont pas formées de préférence de manière plate, mais présente respectivement une forme de toit en eux.

5. Bras de guidage à quatre points selon la revendication 1, **caractérisé en ce que** les oeillets de fixation (17, 37, 83) sont soudés aux extrémités du corps creux en forme de X (10, 30, 80).

6. Bras de guidage à quatre points selon les revendications 1 à 5, **caractérisé en ce qu'**au niveau des endroits de fixation particulièrement très sollicités sur les points d'articulation avec l'essieu rigide, la section du corps creux en forme de X (10, 30, 70, 80) est élargie sur une courte longueur avant le cordon de soudure ou le raccordement à chaque oeillet de fixation (17, 37, 73, 83).

7. Bras de guidage à quatre points selon la revendication 5, **caractérisé en ce que** les oeillets de fixation peuvent être centrés ou excentrés (90) et, dans le cas de la version excentrée, le côté épais est le côté soudé.

8. Bras de guidage à quatre points selon plusieurs revendications mentionnées précédemment, **caractérisé en ce que** le corps creux en forme de X (10, 30, 70, 80) et, le cas échéant, les oeillets de fixation (17, 37, 83) se composent d'un demi-produit en alliage d'acier, qui peut également être soudé, par exemple en acier 1.7734 (acier CrMo).

9. Bras de guidage à quatre points selon la revendication 1, **caractérisé en ce que** le corps creux en forme de X (70, 80) est formé de deux demies coquilles forgées (71, 72, 81, 82), qui sont soudées l'une à l'autre.

10. Bras de guidage à quatre points selon la revendication 9, **caractérisé en ce que** les demies coquilles forgées (71, 72) contiennent respectivement pour moitié les oeillets de fixation (73).

11. Bras de guidage à quatre points selon la revendication 9, **caractérisé en ce que** les oeillets de fixation (83) sont soudés.
